# EUROPÄISCHE PATENTSCHRIFT

(11) **EP 3 142 091 B1**
(45) Veröffentlichungstag und Bekanntmachung des Hinweises auf die Patenterteilung: **14.04.2021**
(21) Anmeldenummer: 16182223.4
(22) Anmeldetag: 01.08.2016
(51) Int. Cl.: G08G 1/01, G08G 1/14

(54) **VERFAHREN ZUR PLANUNG EINES UNTERSTÜTZTEN EINPARKVORGANGS**
METHOD FOR PLANNING A SUPPORTED PARKING PROCESS
PROCEDE DE PLANIFICATION D'UN STATIONNEMENT ASSISTE

(30) Priorität: 04.09.2015 DE 102015217036
(43) Veröffentlichungstag der Anmeldung: 15.03.2017
(73) Patentinhaber: Robert Bosch GmbH, 70442 Stuttgart (DE)
(72) Erfinder: Mayer, Philipp, 70176 Stuttgart (DE)

(56) Entgegenhaltungen:
- WO-A1-2013/050194
- DE-A1-102004 037 641
- DE-A1-102007 055 390
- DE-A1-102009 039 086
- DE-A1-102012 216 994

## Beschreibung

### Stand der Technik

Die Erfindung betrifft ein Verfahren zur Planung eines unterstützten Einparkvorgangs.

Dokument DE 102009039086 A1 beschreibt ein Verfahren und eine Vorrichtung zur Erfassung von Parkplätzen für ein Fahrzeug. Dabei ist vorgesehen, dass ein erstes Fahrzeug mit einer Sensoranordnung unbelegte Parkplätze erfasst, wobei eine Parkplatzvermessung durchgeführt wird. Dabei werden insbesondere die Längen- und Breitenerstreckung des Parkplatzes ermittelt. Die erhaltenen Informationen werden an eine Parkleitzentrale gesendet. Die Parkleitzentrale ermittelt, für welche parkplatzsuchende Fahrzeuge die Parklücke aufgrund ihrer Größe geeignet ist.

Dokument DE 102012216994 A1 betrifft ein Verfahren zur Parkplatzvermittlung und einen Freier-Parkplatz-Assistenten. Verkehrsteilnehmer übermitteln Informationen über freie Parkplätze an ein Cloud-Computing-System, wobei insbesondere die Abmessungen eines freien Parkplatzes als Metainformationen übertragen werden. Bei der Vermittlung von Parkplätzen werden diese Informationen berücksichtigt und beispielsweise nur solche freien Parkplätze angezeigt, die mit den Abmessungen des Fahrzeugs kompatibel sind.

Dokument DE 102004037641 A1 betrifft eine Vorrichtung zum Erfassen von freien Flächen, insbesondere von freien Parkplätzen. Bei der Erfassung der Parkplätze ist vorgesehen, dass die Abmessungen und die Position erfasst und an einen Dienstleister übermittelt werden. Zur Erfassung der Parkplätze können sowohl fahrende Fahrzeuge eingesetzt werden, die einen möglichen Parkplatz im Vorbeifahren vermessen, als auch parkende Fahrzeuge eingesetzt werden, die beispielsweise wegfahrende Fahrzeuge erkennen.

Dokument WO 2013/050194 A1 beschreibt ein Verfahren zum Navigieren eines Fahrzeugs in eine Parklücke, wobei das Fahrzeug hierbei Umgebungsinformationen mittels Sensoren erfasst. Zudem erhält das Fahrzeug Parkplatzinformationen von extern, indem andere Fahrzeuge Parkplatzinformationen mittels eigenen Sensoren erfassen und an einen Server weiterleiten. Das Fahrzeug verwendet während der Navigation in die Parklücke sowohl die selbst erfassten Informationen, wie auch die externen Informationen.

Im Stand der Technik ist bekannt, sowohl die Position als auch die Abmessungen von freien Parkplätzen anderen Verkehrsteilnehmern bzw. einer zentralen Infrastruktureinrichtung zu übermitteln. Eine Verwendung dieser Sensordaten für ein automatisches Einparkmanöver ohne vorherige eigene Vermessung der Parklücke wird im Stand der Technik jedoch weder beschrieben noch nahegelegt.

Zurzeit ist ein halbautomatisiertes Einparken nur dann möglich, wenn die freie Parklücke zuvor vermessen wurde. Dazu muss das einparkende Fahrzeug die Vermessung der freien Parklücke selbst vornehmen und an dieser vorbeifahren, damit die am Fahrzeug seitlich angebrachten Ultraschallsensoren die Parklücke vermessen können. Alternativ dazu kann das einparkende Fahrzeug in die Parklücke hineinfahren, wobei die Parklücke vermessen wird und anschließend das halbautomatisierte

Einparken aktiviert wird. Ein einzügiges Vorwärtseinparken ohne vorherige Vermessung der Parkfläche in die Parklücke, so wie es ein Fahrer natürlicherweise selbst machen würde, ist damit nicht möglich.

### Offenbarung der Erfindung

Um diesem Problem zu begegnen, wird erfindungsgemäß ein Verfahren zur Planung eines unterstützten Einparkvorgangs vorgeschlagen, umfassend folgende Schritte:
a) Innerhalb eines GPS-Radius werden von einem parkplatzsuchenden Fahrzeug Parkflächeninformationen empfangen. Dabei erfolgt das Übertragen der Parkflächeninformationen von einem Server. Zum Empfangen der Parkflächeninformation wird eine Kommunikationseinrichtung des Fahrzeugs verwendet. Die Parkflächeninformationen umfassen standortbasierte, wie auch distanzbasierte Informationen.
b) Es kommt zum Vergleich der zuvor empfangenen standortbasierten Parkflächeninformation und einer aktuellen Standortinformation des Fahrzeugs. Dieser Vergleich wird durch eine Recheneinheit durchgeführt.
c) Parallel zu dem Vergleich der standortbasierten Parkflächeninformation wird ein Offset der Fahrzeugposition bestimmt, der sich im einfachsten Fall durch Differenzbildung aus distanzbasierten Parkflächeninformationen und aktuell vom Fahrzeug erfassten Distanzinformationen berechnen lässt. Die aktuellen Distanzinformationen werden durch Umfeldsensoren des Fahrzeugs erfasst.
d) Auf Basis des ermittelten Offsets, der zuvor verglichenen standortbasierten Parkflächeninformation und der vom Server empfangenen Parkflächeninformation erfolgt schließlich die Bahnplanung eines einzügigen Einparkvorganges des Fahrzeugs mittels eines Einparkassistenten.

Das vorliegende Verfahren erlaubt es also, ohne vorherige Vermessung des Parkplatzes durch das einparkende Fahrzeug, einen einzügigen Einparkvorgang mittels eines Einparkassistenten durchzuführen. Dazu wird die Tatsache genutzt, dass mittels Verwendung von standortbasierten Parkflächeninformationen und dem zusätzlichen Vergleich von zuvor gespeicherten distanzbasierten Umfeldinformationen (distanzbasierten Parkflächeninformationen) mit aktuell erfassten distanzbasierten Umfeldinformationen (durch die Umfeldsensoren des Fahrzeugs erfasste Distanzinformationen) eine wesentlich genauere Lokalisierung des Fahrzeugs relativ zu dem Parkplatz erfolgen kann, in den das Fahrzeug eingeparkt werden soll. Durch den Vergleich der distanzbasierten Parkflächeninformationen kann ein Offset des standortbasierten Koordinantensystems des parkplatzsuchenden von dem standortbasierten Koordinatensystems des Fahrzeugs, welches zuvor Parkflächeninformationen gesammelt hatte, durchgeführt werden. Folglich kann die freie Parklücke in das lokale standortbasierte Koordinantensystem des parkplatzsuchenden Fahrzeugs aufgenommen werden. Damit können Ungenauigkeiten bei der Verwendung von rein standortbasierten Informationen ausgeglichen werden und eine sichere Bahnplanung des Einparkvorgangs durchgeführt werden auf Basis der vom Server empfangenen Parkflächeninformation.

Bevorzugte Ausführungsformen der Erfindung sind durch die Merkmale der Unteransprüche gekennzeichnet.

Vorzugsweise umfassen die standortbasierten Parkflächeninformationen GPS-Informationen. Mit Hilfe dieser GPS-Informationen ist es beispielsweise möglich, einen Standort mit einer Genauigkeit von ungefähr 1 bis 2m zu bestimmen. Anschließend können die erfassten GPS-Informationen anhand einer Karte dargestellt werden.

Bevorzugt umfassen distanzbasierte Parkflächeninformationen gemessene Distanzwerte zu nächstliegenden Objekten. Die Distanzen werden hierbei durch Abstandssensoren, wie z.B. Ultraschallsensoren am Fahrzeug in horizontaler Richtung erfasst. Die durch Ultraschallsensoren vermessenen Distanzwerte weisen eine hohe Genauigkeit von beispielsweise bis zu 1 bis 2cm auf. Die zusätzliche Verwendung dieser distanzbasierten Parkflächeninformation im erfindungsgemäßen Verfahren trägt somit zu einer erhöhten Genauigkeit und somit auch Sicherheit beim Einparken bei.

Der Einparkvorgang, welcher nach der erfindungsgemäßen Bahnplanung erfolgt, wird bevorzugt unterstützt durch einen Parkassistenten durchgeführt. Der Parkassistent kann vorzugsweise in dem Umfang bei dem Einparkvorgang unterstützen, dass der Einparkvorgang zum Teil automatisch oder sogar vollautomatisch erfolgen kann. Dies bietet den Vorteil, dass der Fahrer des einparkenden Fahrzeugs wenig bis gar keine Eigenarbeit bei dem Einparkvorgang zu leisten hat.

Die übertragenen distanzbasierten Parkflächeninformationen werden vom Server hinsichtlich dessen ausgewertet, ob die Länge und Breite der freien Parkfläche ein Einparken des parkplatzsuchenden Fahrzeugs ermöglicht. Dies bietet den Vorteil, dass keine Einparkvorgänge geplant werden, die aufgrund beispielsweise zu geringer Breite nicht für das einparkende Fahrzeug geeignet ist und es dadurch zu möglichen Schäden kommen kann. Die Bahnplanung des Einparkvorgangs erfolgt auf Basis der vom Server übertragenen Parkflächeninformationen, die dem parkplatzsuchenden Empfängerfahrzeugs vor der Vorbeifahrt an der Parklücke andernfalls fehlen würden.

Erfindungsgemäß umfassen die freien Parkflächen Quer- sowie Parallelparkflächen. Dies bietet den Vorteil, dass somit erfindungsgemäß die Bahnplanung für verschiedene Arten von Parkplätzen durchgeführt werden kann.

Nach einem weiteren Aspekt der Erfindung, wird ein System zur Planung eines unterstützten Einparkvorgangs vorgeschlagen. Das erfindungsgemäße System umfasst Umfeldsensoren zur Erfassung von distanzbasierten Parkflächeninformationen. Das System umfasst zusätzlich eine Navigationseinrichtung, die standortbasierte Parkflächeninformationen, also vorzugsweise GPS-Informationen, erfassen kann. Zur Unterstützung des Einparkvorganges umfasst das System zur Planung eines unterstützten Einparkvorgangs zusätzlich einen Einparkassistenten. Zur Bestimmung eines distanzbasierten Offsets weist das erfindungsgemäße System eine Recheneinheit auf, mit der die Berechnung des Offsets in Echtzeit, möglich ist. Zum Empfangen von Parkflächeninformationen enthält das System zusätzlich eine Kommunikationseinrichtung
Dieses System ist somit in der Lage, den erfindungsmäßig unterstützten Einparkvorgang ohne vorherige Vermessung der Parkfläche durchzuführen.

Die Umfeldsensoren, die am System zur Planung eines unterstützten Einparkvorgangs angebracht sind, sind zur Weg- und Abstandsmessung ausgebildet. Die Umfeldsensoren dienen damit erfindungsgemäß zur Erfassung der distanzbasierten Parkflächeninformationen. Diese Umfeldsensoren können z.B. Ultraschallsensoren umfassen, mit Hilfe derer Distanzwerte zu nächstliegenden Objekten erfasst werden können. Derartige Sensorsysteme besitzen den Vorteil, dass sie oft schon gut entwickelt und derzeit schon in Fahrzeugen für Einparkvorgänge verwendet werden.

Die Kommunikationseinrichtung, welche im erfindungsgemäßen System zur Planung eines unterstützten Einparkvorgangs zum Empfangen von Parkflächeninformationen von einem Server dient, ist bevorzugt zur drahtlosen Sendeübertragung ausgebildet. Das bietet den Vorteil, dass keine zusätzlichen Kabel im Fahrzeug verlegt werden müssen und die Kommunikationseinrichtung zudem an beliebiger Stelle des Fahrzeugs befestigt sein kann.

Der Einparkassistent, welcher erfindungsgemäß im System zur Planung eines unterstützten Einparkvorgangs angebracht ist, ist so eingerichtet, dass ein automatisches oder teilautomatisches Einparken nach Durchführung der Bahnplanung erfolgen kann.

Nach einem weiteren Aspekt der Erfindung wird ein zweites System zur Planung eines unterstützten Einparkvorgangs vorgeschlagen, welches ein zweites Fahrzeug aufweist, das analoge Eigenschaften zu dem ersten System zur Planung eines unterstützten Einparkvorgangs aufweist. Das bietet den Vorteil, dass Fahrzeuge, je nachdem, ob sie sich auf Parkplatzsuche befinden oder nicht, entweder Parkflächeninformationen sammeln und übertragen oder auch empfangen können.

Das zweite System umfasst einen Server, der dazu eingerichtet ist, Parkflächeninformationen von dem zweiten Fahrzeug zu empfangen, auszuwerten, zu speichern und an ein parkplatzsuchendes Fahrzeug zu übertragen. Das parkplatzsuchende Fahrzeug ist somit ebenfalls Teil dieses Systems.

Vorzugsweise umfasst das zweite System ein zweites Fahrzeug, welches sich bei der Erfassung der Parkflächeninformationen in Bewegung befindet. Das zweite, sich in Bewegung befindende Fahrzeug, kann sich dabei entweder auf der Fahrspur, die an die Parkfläche angrenzt, und/oder auf der Gegenspur bezüglich der Parkfläche befinden. Dies bietet den Vorteil, dass das zweite Fahrzeug Parkflächeninformationen von verschiedenen Parkflächen und dessen Umgebung sammeln kann. Andererseits kann das zweite Fahrzeug während der Erfassung der Parkflächeninformationen auch parken. Dadurch können parkende Fahrzeuge direkt erkennen, ob eine Parkfläche neben ihnen besetzt oder frei ist.

Vorzugsweise werden Parkflächeninformationen vom Server gelöscht und/oder überschrieben, falls ein zuvor freier Parkplatz von einem dritten Fahrzeug als nun belegt erkannt wird. Dieses dritte Fahrzeug kann beispielsweise ein parkendes Fahrzeug sein, welches direkt neben der zuvor freien Parkfläche parkt. Es kann sich allerdings auch um ein vorbeifahrendes drittes Fahrzeug handeln. Auch eine Kombination von beidem, also ein parkendes und vorbeifahrendes Fahrzeug wäre vorstellbar. In allen Fällen wird durch die angebrachten Ultraschallsensoren am dritten Fahrzeug die zuvor freie Parkfläche als nun belegt erkannt, wodurch die Parkflächeninformationen, welche auf dem Server gespeichert sind, aktualisiert werden.

Falls ein freier Parkplatz durch ein zweites, sowie ein nachfahrendes drittes Fahrzeug erneut vermessen wird, so vergleicht der Server erfindungsgemäß die von beiden Fahrzeugen übermittelten Parkflächeninformationen derselben Parkfläche. Hierbei wäre beispielsweise vorstellbar, dass ein arithmetischer Mittelwert der übermittelten Distanzwerte (also Länge und Breite der Parkfläche) gebildet wird. Dies bietet den Vorteil, dass im Fall, dass mehrere Fahrzeuge eine freie Parkfläche vermessen, die Parkflächeninformationen mit einer höheren Genauigkeit im Server gespeichert werden, was für das parkplatzsuchende Fahrzeug in einer höheren Genauigkeit der Bahnplanung resultiert.

### Kurze Beschreibung der Zeichnungen

Ausführungsbeispiele sind in den Zeichnungen dargestellt und in der nachfolgenden Beschreibung näher erläutert.
Fig.1 zeigt schematisch eine Draufsicht auf eine Situation mit einem geplanten Einparkvorgang für ein parkplatzsuchendes Fahrzeug in eine Querparklücke und anderen fahrenden Fahrzeugen, die Parkflächeninformationen erfassen.
Fig.2 zeigt schematisch eine Draufsicht auf eine Situation mit einem geplanten Einparkvorgang für ein parkplatzsuchendes Fahrzeug in eine Parallelparklücke und anderen fahrenden Fahrzeugen, die Parkflächeninformationen erfassen.
Fig.3a zeigt schematisch eine Draufsicht auf eine Situation mit einem geplanten Einparkvorgang für ein parkplatzsuchendes Fahrzeug in eine Parallelparklücke, der jedoch nicht durchgeführt werden kann, da zuvor ein anderes Fahrzeug den Parkplatz belegt hat. Diese Belegung wird durch ein weiteres vorbeifahrendes Fahrzeug erfasst.
Fig.3b zeigt schematisch eine Draufsicht auf eine Situation mit einem geplanten Einparkvorgang für ein parkplatzsuchendes Fahrzeug in eine Parallelparklücke, der jedoch nicht durchgeführt werden kann, da zuvor ein anderes Fahrzeug den Parkplatz belegt hat. Diese Belegung wird durch parkende Fahrzeuge erfasst.
Fig.4 zeigt schematisch eine Draufsicht auf eine Situation, mit einem geplanten Einparkvorgang für ein parkplatzsuchendes Fahrzeug in eine Parallelparklücke, bei der die freie Parkfäche durch ein weiteres vorbeifahrendes Fahrzeug erneut vermessen wird. Dieser Vergleich mehrerer Parkflächeninformationen wird durch Bildung eines arithmetischen Mittels durch den Server durchgeführt.
Fig.5 zeigt schematisch die Bildung des Offsets durch unterschiedliche Fahrtrouten des parkplatzsuchenden und des, die Parkfläche vermessenden, zweiten Fahrzeuges und eine Messungenauigkeiten der GPS-Signale der beiden Fahrzeuge.
Fig.6 zeigt schematisch das Cockpit eines Fahrzeugs mit dessen Kommunikationseinrichtung, Einparkassistenten, Navigationseinrichtung und Recheneinheit.
Fig.7 zeigt einen Verfahrensablauf der Kommunikation zwischen zweitem Fahrzeug und dem Server nach einem Ausführungsbeispiel der Erfindung als Flußdiagramm.
Fig.8 zeigt einen Verfahrensablauf der Planung des unterstützten Einparkvorgangs durch das Fahrzeug nach einem Ausführungsbeispiel der Erfindung als Flußdiagramm.

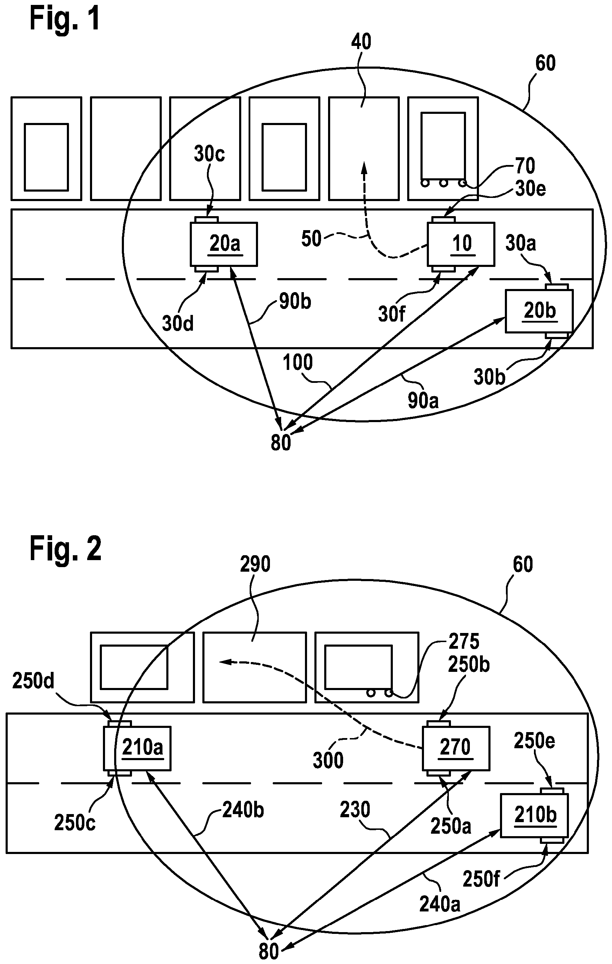

Fig. 1 zeigt schematisch eine Draufsicht auf eine Situation, bei der zwei zweite Fahrzeuge **20a, 20b** zunächst auf ihrer Fahrt distanzbasierte und standortbasierte Informationen über die freie Querparkfläche **40** und dessen Umgebung sammeln und auf Basis dieser Informationen anschließend ein Einparkvorgang für ein parkplatzsuchendes Fahrzeug 10 durch einen Einparkassistenten geplant wird.

Die distanzbasierten Parkflächeninformationen werden beispielsweise durch Ultraschallsensoren des zweiten Fahrzeugs **20a, 20b** erfasst und stellen die Distanz oder auch den Abstand auf der Fahrtroute zu in horizontzaler Richtung nächstliegenden Objekten dar. Zudem kann mit den distanzbasierten Parkflächeninformationen auch die Größe der Querparkfläche **40** bestimmt werden, wodurch sichergestellt wird, dass nur Parkflächen berücksichtigt werden, deren Länge und Breite ein Einparken des parkplatzsuchenden Fahrzeugs **10** ermöglicht.

Die gemessenen Distanzwerte stellen Hindernisse in der Fahrzeugumgebung, zum Beispiel andere parkende Fahrzeuge, aber auch Bäume oder Menschen dar. Die Ultraschallsensoren **30c, 30d, 30e, 30f** sind beispielsweise links **30c, 30e** und rechts **30d, 30f** an der Front des zweiten Fahrzeugs befestigt und deren Verwendung bietet den Vorteil, dass sie schon weit entwickelt und in Ihrer Anwendung vielfach erprobt sind.

Die standortbasierten Parkflächeninformationen umfassen GPS-Informationen, z.B. Koordinaten der Parkflächen, die durch eine Navigationseinrichtung des Fahrzeugs ermittelt werden. Die Parkflächen-Informationen können durch zweite Fahrzeuge **20a,** welche sich in gleicher Fahrtrichtung wie das parkplatzsuchende Fahrzeug oder von anderen zweiten Fahrzeugen **20b,** die sich in entgegengesetzter Richtung bewegen, erfasst werden. Damit werden entweder Parkflächen-Informationen von Parkflächen, die an die Fahrspur des zweiten Fahrzeugs **20a** angrenzen und/oder von Parkflächen, die an die Gegenspur des anderen zweiten Fahrzeugs **20b** angrenzen, erfasst. Diese erfassten Parkflächen-Informationen von entweder dem zweiten Fahrzeug **20a** in Fahrrichtung oder des anderen zweiten Fahrzeugs **20b** in entgegengesetzter Fahrtrichtung werden anschließend an einen Server **80** übertragen **90a, 90b** und von diesem gespeichert. Von diesem Server **80** werden die Parkflächen-Informationen anschließend an das parkplatzsuchende Fahrzeug übertragen **100,** welches ebenfalls durch beispielsweise Ultraschallsensoren **30e, 30f,** welche links **30f** und rechts **30e** an der Front des parkplatzsuchenden Fahrzeugs **10** befestigt sein können, aktuelle Distanz-Informationen **70** und durch eine Navigationseinrichtung eine aktuelle Standort-Information des parkplatzsuchenden Fahrzeugs **10** erfasst.

Damit die Datenmenge nicht zu groß wird, werden dem parkplatzsuchenden Fahrzeug **10** nur Parkflächeninformationen innerhalb eines GPS-Radius **60** übermittelt und beispielsweise anhand einer Karte angezeigt. Die Größe des GPS-Radius **60** kann beispielsweise 50-100 Meter betragen und er bewegt sich während der Fahrt des parkplatzsuchenden Fahrzeuges **10** mit, wobei das parkplatzsuchende Fahrzeug **10** vorteilhaft den Mittelpunkt des GPS-Radius **60** bildet. Damit können freie Parkflächen in Fahrtrichtung, wie auch in entgegengesetzter Richtung angezeigt werden. Das parkplatzsuchende Fahrzeug **10** muss sich allerdings nicht zwingend in der Mitte des GPS-Radius **60** befinden, sondern kann sich beispielsweise auch an einem Rand des GPS-Radius **60** befinden, um so eine größere Fläche in Fahrtrichtung erfassen zu können.

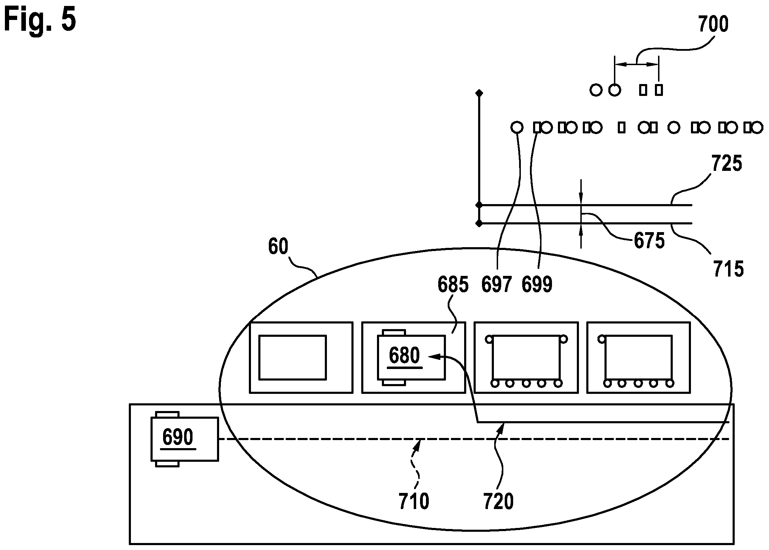

Auf der Fahrt des parkplatzsuchenden Fahrzeugs **10** zu der nächstgelegenen freien Querparkfläche **40** werden kontinuierlich die standortbasierten Parkflächen-Informationen, übermittelt durch den Server **80,** und die aktuelle Standort-Information des parkplatzsuchenden Fahrzeugs **10** durch eine Recheneinheit miteinander verglichen. Gleichzeitig werden auch die distanzbasierten Parkflächeninformationen, übermittelt durch den Server **80,** und die aktuellen Distanz-Informationen des parkplatzsuchenden Fahrzeugs **10** miteinander verglichen. Da das zweite Fahrzeug **20a, 20b** zuvor eine andere Route als das parkplatzsuchende Fahrzeug **10** gefahren ist und damit die Distanzwerte zu in horizontaler Richtung nächstliegenden Objekten von einem anderen Referenzpunkt gemessen wurden, kommt es bei dem Vergleich der distanzbasierten Parkflächeninformationen kontinuierlich zu einer Differenz, der als der Offset der GPS-Position der freien Querparkfläche **40** bezeichnet wird (zu dem Offset siehe Beschreibung der Fig. 5).

Die zusätzliche Verwendung dieses Offsets in der Bahnplanung des Einparkvorgangs dient erfindungsgemäß zur Erhöhung der Genauigkeit des erfindungsmäßigen Verfahrens, denn während die GPS-Informationen der Querparkfläche **40** eine Genauigkeit von 1-2 Metern besitzt und damit für einen Einparkvorgang eine zu hohe Messungenauigkeit besitzt, können mittels Ultraschallsensoren **30a, 30b, 30c, 30d, 30e** Daten mit einer Genauigkeit von 1-15 cm gesammelt werden. Basierend auf diesem Offset und dem ständigen Vergleich der standortbasierten Parkflächen-Informationen und der aktuellen Standort-Information des parkplatzsuchenden Fahrzeugs **110,** kann schlussendlich eine Bahnplanung **50** für einen Einparkvorgangs in die freie Querparkfläche **40** durch einen Einparkassistent erfolgen. Der eigentliche Einparkvorgang erfolgt dann wiederum automatisch oder teilautomatisch durch den Einparkassistenten, einzügig und ohne dass eine vorherige Vermessung der Parkfläche nötig ist.

Fig. 2 zeigt schematisch eine Draufsicht auf eine Situation, bei der zwei zweite Fahrzeuge **210a, 210b** zunächst auf ihrer Fahrt distanzbasierte und standortbasierte Informationen über die freie Parallelparkfläche **290** und deren Umgebung sammeln. Auf Basis dieser Informationen kann anschließend ein Einparkvorgang für ein parkplatzsuchendes Fahrzeug **270** durch einen Einparkassistenten geplant werden.

Die distanzbasierten Parkflächeninformationen **275** werden beispielsweise durch Ultraschallsensoren der zweiten Fahrzeuge **210a, 210b** erfasst und stellen die Distanz oder auch den Abstand auf der Fahrtroute zu in horizontaler Richtung nächstliegenden Objekten dar. Zudem wird mit den distanzbasierten Parkflächeninformationen auch die Größe der Parallelparkfläche **290** bestimmt, wodurch sichergestellt wird, dass für das parkplatzsuchende Fahrzeug **270** nur Parkflächen berücksichtigt werden, deren Länge und Breite ein Einparken des parkplatzsuchenden Fahrzeugs **270** ermöglicht.

Diese Distanzwerte stellen auch hier beispielsweise andere parkende Fahrzeuge, aber auch Bäume oder Menschen dar. Durch die Ausrichtung der Fahrzeuge innerhalb der belegten Parkflächen erkennt der Server **80** durch Auswertung der distanzbasierten Parkflächeninformationen, ob es sich um Parallelparkflächen handelt. Die Ultraschallsensoren **250c, 250d, 250e, 250f** sind beispielsweise links **250c, 250e** und rechts **250d, 250f** an der Front der zweiten Fahrzeuge befestigt.

Die standortbasierten Parkflächeninformationen umfassen GPS-Informationen der Parkflächen, die durch eine Navigationseinrichtung des Fahrzeugs ermittelt wird. Die Parkflächen-Informationen können durch Fahrzeuge, welche sich in gleicher Fahrtrichtung **210a** wie das parkplatzsuchende Fahrzeug oder von Fahrzeugen, die sich in entgegengesetzter Richtung **210b** befinden, erfasst werden. Damit werden entweder Parkflächen-Informationen von Parkflächen, die an die Fahrspur des zweiten Fahrzeugs angrenzen und/oder von Parkflächen, die an die Gegenspur des zweiten Fahrzeugs **210a, 210b** angrenzen, erfasst.

Diese erfassten Parkflächen-Informationen von entweder dem einen zweiten Fahrzeug **210a** in Fahrrichtung oder von dem anderen zweiten Fahrzeug **210b** in entgegengesetzter Fahrtrichtung werden auch in diesem Beispiel anschließend an einen Server **80** übertragen **240a, 240b** und von diesem gespeichert. Von diesem Server **220** können die Parkflächen-Informationen anschließend an das parkplatzsuchende Fahrzeug **270** übertragen werden **230.** Das parkplatzsuchende Fahrzeug **270** erfasst ebenfalls durch beispielsweise Ultraschallsensoren links **250a,** welche links an der Front des parkplatzsuchenden Fahrzeugs **270** angebracht sind und Ultraschallsensoren rechts **250b,** welche rechts an der Front des parkplatzsuchenden Fahrzeugs **270** angebracht sind, aktuelle Distanz-Informationen **275** und durch eine Navigationseinrichtung eine aktuelle Standort-Information.
Damit die Datenmenge nicht zu groß wird, werden dem parkplatzsuchenden Fahrzeug **270** auch in diesem Beispiel nur Parkflächeninformationen innerhalb eines GPS-Radius **60** übermittelt und beispielsweise anhand einer Karte angezeigt.

Auf der Fahrt des parkplatzsuchenden Fahrzeugs **270** zu der nächstgelegenen freien Parallelparkfläche **290** werden wie in den vorherigen Beispielen kontinuierlich die standortbasierten Parkflächen-Informationen, übermittelt durch den Server **80,** und die aktuelle Standort-Information des parkplatzsuchenden Fahrzeugs **270** durch eine Recheneinheit miteinander verglichen. Gleichzeitig werden auch die distanzbasierten Parkflächeninformationen, übermittelt durch den Server **80,** und die aktuellen Distanz-Informationen des parkplatzsuchenden Fahrzeugs **270** miteinander verglichen. Da die zweiten Fahrzeuge **210a, 210b** zuvor eine andere Route als das parkplatzsuchende Fahrzeug **270** gefahren sind und damit die Distanzwerte zu in horizontaler Richtung nächstliegenden Objekten von einem anderen Referenzpunkt gemessen wurden, kommt es bei dem Vergleich der distanzbasierten Parkflächeninformationen kontinuierlich zu einer Differenz, der als der Offset der GPS-Position der freien Parallelparkfläche **290** bezeichnet wird (zu dem Offset siehe Beschreibung der Fig. 5).

Die zusätzliche Verwendung dieses Offsets dient auch in diesem Ausführungsbeispiel zur Erhöhung der Genauigkeit des erfindungsmäßigen Verfahrens. Basierend auf diesem Offset und dem ständigen Vergleich der standortbasierten Parkflächen-Informationen und der aktuellen Standort-Information des parkplatzsuchenden Fahrzeugs **270,** kann schlussendlich eine Bahnplanung **300** für einen Einparkvorgang, vorzugsweise in Vorwärtsrichtung, in die freie Parallelparkfläche **290** durch einen Einparkassistent erfolgen. Der eigentliche Einparkvorgang erfolgt dann wiederum automatisch oder teilautomatisch wie in den vorherigen Beispielen durch den Einparkassistenten einzügig ohne vorherige Vermessung der Parkfläche.

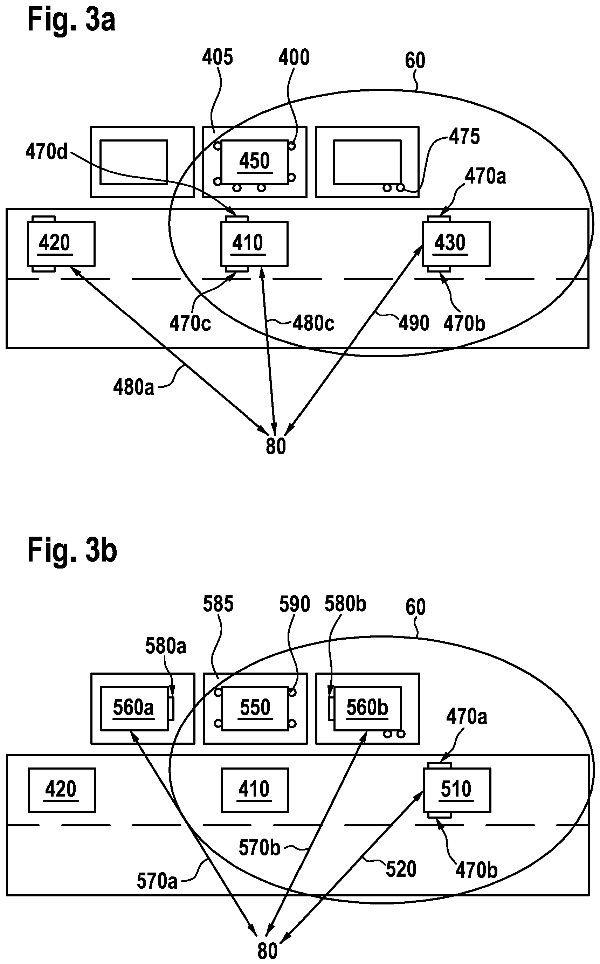

Fig. 3a zeigt schematisch die Draufsicht auf eine Situation, bei der ein drittes Fahrzeug **410** eine Parallelparkfläche **405** als belegt erkennt. Zuvor wurde die Parallelparkfläche **405** dem parkplatzsuchenden Fahrzeug **430** als frei angezeigt und von einem zweiten Fahrzeug **420** vermessen, dann jedoch von einem weiteren vorherfahrenden Fahrzeug **450** belegt.

Zunächst fährt ein zweites Fahrzeug **420,** welches Parkflächeninformationen erfasst, an einer zu diesem Zeitpunkt freien Parallelparkfläche **405** vorbei und überträgt die standortbasierten und distanzbasierten Informationen **480a** an den Server **80.** Das parkplatzsuchende Fahrzeug **430** empfängt diese Informationen und wird mittels eines GPS-Signals zu der zu diesem Zeitpunkt freien Parallelparkfläche **405** geleitet. Ein, dem parkplatzsuchenden Fahrzeug **430** vorherfahrendes Fahrzeug **450** ist allerdings selbst auf der Suche nach einer freien Parkfläche und wählt deshalb die Parallelparkfläche **405** zum Parken. Die nun belegte Parallelparkfläche **405** wird, wie in Fig. 3a zu erkennen ist, von einem dritten Fahrzeug **410,** welches dem parkplatzsuchenden Fahrzeug **430** ebenfalls vorwegfährt und Parkflächeninformationen sammelt, als belegt erkannt. Diese Belegung wird beispielsweise durch Verwendung der Ultraschallsensoren **470c, 470d** erkannt, welche sich rechts **470d** und links **470c** an der Front des dritten Fahrzeugs **410** befinden und mittels derer Distanzwerte zu in horizontal nächstliegenden Objekten (in diesem Fall Distanzwerte **400** zu dem zuvor vorherfahrenden und nun parkenden Fahrzeug **450)** ermittelt werden können. Die erfassten Parkflächeninformationen werden nun an den Server **80** übertragen **480c** und anschließend an das parkplatzsuchende Fahrzeug **430,** welches ebenfalls aktuelle Distanz-Informationen **475** durch seine Ultraschallsensoren, rechts **470a** und links **470b** an der Front befestigt, erfasst, übertragen **490.** Damit besteht nicht die Gefahr, dass das parkplatzsuchende Fahrzeug **430** einen Einparkvorgang in die nun belegte Parallelparkfläche **405** unternimmt, sondern die erfindungsmäßige Planung des unterstützten Einparkvorgangs wird erst gar nicht vorgenommen. Das parkplatzsuchende Fahrzeug **450** muss sich weiter auf die Suche nach einer freien Parkfläche machen, die ihm innerhalb des GPS-Radius **60** angezeigt wird.

Fig. 3b zeigt schematisch die Draufsicht auf eine Situation, bei der zwei zweite Fahrzeug **560a, 560b** eine Parallelparkfläche **585** als belegt erkennt. Zuvor wurde die Parallelparkfläche **585** dem parkplatzsuchenden Fahrzeug **510** als frei angezeigt, dann jedoch von einem weiteren vorherfahrenden Fahrzeug **550** belegt. Zusätzlich sind auch auf dieser Fig. 3a wieder die vorausfahrenden Fahrzeuge **410, 420** gezeigt, deren Ultraschallsensoren in diesem Fall nicht dargestellt sind.

Zunächst empfängt das parkplatzsuchende Fahrzeug **510** Parkflächen-Informationen und wird mittels eines GPS-Signals zu der zu diesem Zeitpunkt freien Parallelparkfläche **585** geleitet. Ein, dem parkplatzsuchenden Fahrzeug **510** vorherfahrendes Fahrzeug **550** ist allerdings auch in diesem Ausführungsbeispiel selbst auf der Suche nach einer freien Parkfläche und wählt deshalb die Parallelparkfläche **585** zum Parken. Die nun belegte Parallelparkfläche **585** wird, wie in Fig. 3b zu erkennen ist, von den zwei an die Parkfläche angrenzend parkenden zweiten Fahrzeugen **560a, 560b** als belegt erkannt. Diese Belegung wird beispielsweise durch Verwendung der Ultraschallsensoren **580a, 580b** erkannt, welche sich am Heck des einen zweiten Fahrzeugs **580a** und an der Front des anderen zweiten Fahrzeugs **580b** befinden und mittels derer Distanzwerte zu in horizontal nächstliegenden Objekten (in diesem Fall Distanzwerte **590** zu dem zuvor vorherfahrenden und nun parkenden Fahrzeug **550)** ermittelt werden können. Die erfassten Parkflächeninformationen werden nun, wie auch im vorherigen Ausführungsbeispiel gezeigt, an den Server **80** übertragen **570a, 570b** und anschließend an das parkplatzsuchende Fahrzeug **510** übertragen **520.** Damit besteht nicht die Gefahr, dass das parkplatzsuchende Fahrzeug **510** einen Einparkvorgang in die nun belegte Parallelparkfläche **585** unternimmt, sondern die erfindungsmäßige Planung des unterstützten Einparkvorgangs wird erst gar nicht vorgenommen. Das parkplatzsuchende Fahrzeug **510** muss sich auch in diesem Ausführungsbeispiel weiter auf die Suche nach einer freien Parkfläche machen, die ihm innerhalb des GPS-Radius **60** angezeigt wird.

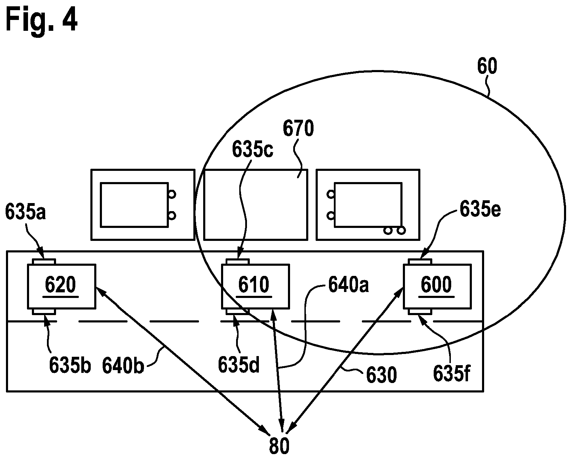

Fig.4 zeigt schematisch die Draufsicht auf eine Situation, bei der eine freie Parkfläche **670** durch ein zweites Fahrzeug **620** und ein drittes Fahrzeug **610,** welche Parkflächeninformationen sammeln, für ein folgendes, parkplatzsuchendes Fahrzeug **600** doppelt vermessen wird.

Zunächst fährt ein zweites Fahrzeug **620** an der freien Parallelparkfläche **670** vorbei, erfasst Parkflächeninformation mittels seiner Ultraschallsensoren **635a, 635b** und seiner Navigationseinrichtung von der freien Parallelparkfläche **670** und überträgt **640b** anschließend die standortbasierten und distanzbasierten Informationen an einen Server **80.** Das parkplatzsuchende Fahrzeug **600,** welches ebenfalls wie in den vorherigen Ausführungsbeispielen mittels seiner Ultraschallsensoren **635e, 635f** distanzbasierte Informationen erfasst, empfängt daraufhin zunächst nur diese ersten Parkflächeninformationen und wird mittels eines GPS-Signals zu der freien Parallelparkfläche **670** geleitet.

Ein drittes Fahrzeug **610,** welches dem parkplatzsuchenden Fahrzeug **600** vorausfährt, sammelt ebenfalls mittels seiner Ultraschallsensoren **635c, 635d** Parkflächeninformationen und erfasst distanzbasierte Informationen der freien Parallelparkfläche **670.** Diese Informationen werden anschließend dem Server **80** übertragen **640a** und dort mit den bereits vorhandenen Informationen über die Parallelparkfläche **670** verglichen und aus den neuen Informationen und den bereits vorhandenen Informationen über die Parallelparkfläche **670** werden aktualisierte, gegebenenfalls genauere Informationen über die Parallelparkfläche **670** berechnet. Beispielsweise können von den durch beide zweiten Fahrzeugen **610,620** erfassten distanzbasierten Parkflächeninformationen der freien Parallelparkfläche **670** die jeweiligen arithmetischen Mittelwerte gebildet werden. So hat beispielsweise das eine zweite Fahrzeug **620** eine Länge der freien Parallelparkfläche von 3,12 Metern und dritte Fahrzeug **610** eine Länge von 3,10 Metern ermittelt. Der Server **80** wird von diesen Werten einen Mittelwert von 3,11 Metern ermitteln und an das parkplatzsuchende Fahrzeug **600** übertragen **630.**

Fig.5 zeigt schematisch die Draufsicht auf eine Situation, bei der ein zweites Fahrzeug **690,** welches die zuvor freie Parallelparkfläche **685** vermisst, eine andere Route **710** gefahren ist als beispielsweise das parkplatzsuchende Fahrzeug **680,** wodurch ein Offset entsteht, der beim Vergleich der distanzbasierten Informationen erfindungsgemäß berücksichtigt werden muss.

Wie in Fig.5 schematisch dargestellt ist, hat ein zweites Fahrzeug **690,** welches zu einem früheren Zeitpunkt Parkflächeninformationen gesammelt und die zuvor freie Parallelparkfläche **685** vermessen hat, eine gerade, zur linken Seite der Fahrbahnspur geneigte Route **710** befahren. Das parkplatzsuchende Fahrzeug **680,** welches dem zweiten Fahrzeug **690** folgt, fährt dagegen eine gerade, leicht zur rechten Seite der Fahrbahnspur geneigte andere Route **720.** Beide Fahrzeuge, das zweite Fahrzeug **690** und das parkplatzsuchende Fahrzeug **680,** erfassen während ihrer Fahrt mit Hilfe der befestigten Ultraschallsensoren Distanzwerte zu in horizontaler Richtung nächstliegenden Objekten. Diese distanzbasierten Parkflächeninformationen des parkplatzsuchenden Fahrzeugs **697,** sowie die distanzbasierten Parkflächeninformationen des zweiten Fahrzeugs **699** besitzen durch diese beiden unterschiedlichen Routen **710,720** innerhalb ihres eigenen GPS-Koordinatensystems eine konstante Abweichung in Y-Richtung **675.**

Zudem kommt es aufgrund der Ungenauigkeit der GPS-Signale der beiden Fahrzeuge zu einer zusätzlichen Abweichung in X-Richtung **700** der aufgezeichneten distanzbasierten Parkflächeninformationen. Diese Abweichung in X-Richtung **700,** wie auch die Abweichung in Y-Richtung **675** kann durch eine Recheneinheit, die z.B. in der Navigationseinrichtung des parkplatzsuchenden Fahrzeugs **680** mit eingebaut sein kann, berechnet werden. Die Berechnung kann im Prinzip in Echtzeit ohne große Zeitverzögerung, durchgeführt werden. Die Abweichung in X-Richtung **700** wird hierbei durch den Vergleich von Distanzwerten, die das zweites Fahrzeug **690** erfasst hat und die erfindungsgemäß an das parkplatzsuchende Fahrzeug **680** übermittelt wurden, mit von dem parkplatzsuchenden Fahrzeug **680** selbst erfassten Distanzwerten, berechnet. Beispielsweise durch eine Erkennung von Abweichung von markanten Distanzwerten, wie in diesem Ausführungsbeispiel der leere Platz zwischen zwei parkenden Fahrzeugen, oder durch ein Inbezugsetzen von markanten Profilen von Distanzwerten, kann die räumliche Abweichung und damit der Offset berechnet werden.

Die distanzbasierten Parkflächeninformationen des parkplatzsuchenden Fahrzeugs **697** wurden in der Darstellung nach Figur 5 später erfasst, als die distanzbasierten Parkflächeninformationen des zweiten Fahrzeugs **699.** Bei der Berechnung der Abweichungen ist eine hohe Messfrequenz von Vorteil, denn diese führt zu einer erhöhten Genauigkeit bei der Berechnung des als Offsets bezeichneten Abweichung in die jeweilige Richtung. Durch den Offset, welcher somit die Abweichungen der GPS-Signale der beiden Fahrzeuge bezeichnet, kann die freie Parklücke **685** folglich in das lokale Koordinatensystem **725** des parkplatzsuchenden Fahrzeugs **680** gelegt werden. Dabei kann der Offset umso genauer durch die Recheneinheit berechnet werden, je höher die Messfrequenzen der Ultraschallsensoren des parkplatzsuchenden Fahrzeugs **680** und des zweiten Fahrzeugs **690** sind. Auf die Berechnung des Offsets folgend kann erfindungsgemäß eine Bahnplanung durch den Einparkassistenten von der Position des parkplatzsuchenden Fahrzeugs **680** in die freie Parklücke **685** hinein einzügig erfolgen.

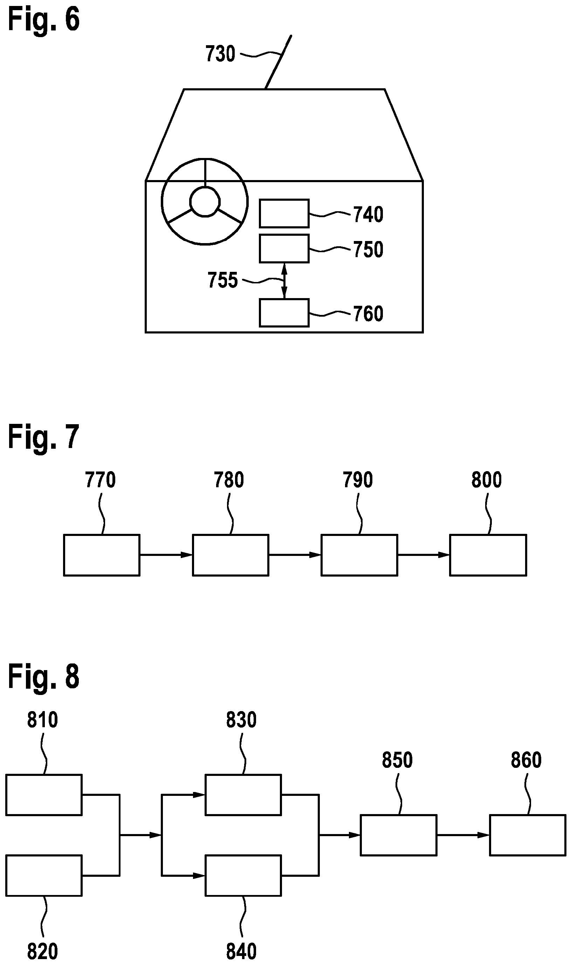

Figur 6 zeigt schematisch das Cockpit eines Fahrzeugs mit dessen Kommunikationseinrichtung **730,** Einparkassistenten **750,** Navigationseinrichtung **740** und Recheneinheit **760.** Das Fahrzeug kann ein parkplatzsuchendes Fahrzeug oder ein zweites, Parkflächeninformationen sammelndes Fahrzeug, darstellen.

Mit Hilfe der Kommunikationseinrichtung **730** können Parkflächeninformationen versendet (wie in den vorherigen Ausführungsbeispielen durch das zweite, Parkflächeninformationen sammelnde Fahrzeug) und/oder empfangen (wie in den vorherigen Ausführungsbeispielen von dem parkplatzsuchenden Fahrzeug) werden. Die Kommunikationseinrichtung **730** kann beispielsweise zur drahtlosen Sendeübertragung,ausgebildet sein, dabei können bekannte Funk- oder Mobilfunkstandards verwendet werden.

Die Navigationseinrichtung **740** dient zur Erfassung von standortbasierten Parkflächeninformationen. Dies können GPS-Informationen des parkplatzsuchenden Fahrzeugs und/oder dessen Umfeld darstellen. Mittels des Einparkassistenten **750** erfolgt die Bahnplanung des Einparkvorgangs. Zur Bahnplanung verwendet der Einparkassistent **750** standortbasierte Parkflächeninformationen, wie auch distanzbasierte Parkinformationen und den daraus bestimmten Offset. Die Kommunikationseinheit **730** erhält die verglichenen standortbasierten Parkflächeninformationen, wie auch den Offset, von der Recheneinheit **760.** Während des auf die Bahnplanung folgenden Einparkvorgangs kann der Einparkassistent **750** beispielsweise eine unterstützende Funktion einnehmen, so dass der Einparkvorgang automatisch oder teilautomatisch erfolgen kann.

Mittels der Recheneinheit **760** können die standortbasierten Parkflächeninformationen (beispielsweise die durch das zweite Fahrzeug erfassten GPS-Informationen der Parkfläche) und die aktuellen Standortinformationen des parkplatzsuchenden Fahrzeugs (beispielsweise die GPS-Information des parkplatzsuchenden Fahrzeugs) verglichen werden. Zudem kann der Offset (näheres zum Offset siehe Beschreibung der Figur 5) durch die Recheneinheit, beispielsweise durch Differenzbildung, bestimmt werden. Die Recheneinheit **760** kann beispielsweise extern im Auto befestigt oder beispielsweise direkt im Einparkassistenten **750** integriert sein. Die Kommunikation und somit die Übertragung **755** der erfassten Parkflächeninformationen zwischen Recheneinheit **760** und Einparkassistent **750** kann beispielsweise drahtlos erfolgen.

Figur 7 zeigt erfindungsgemäß anhand eines Flussdiagramms die Kommunikation zwischen einem zweiten Fahrzeug, welches Parkflächeninformationen sammelt und dem Server, welcher dieser speichert und an das parkplatzsuchende Fahrzeug überträgt.

Als erster Schritt **770** im Flussdiagramm erfolgt vorzugsweise die Erfassung der Parkflächeninformationen durch das zweite Fahrzeug. Hierbei erfolgt die Erfassung von standortbasierten Informationen und somit GPS-Informationen der freien Parkfläche und dessen Umfeld durch die Navigationseinrichtung des zweiten Fahrzeugs. Die distanzbasierten Parkflächeninformationen und somit die Distanzen zu in horizontaler Richtung nächstliegenden Objekten werden beispielsweise durch Umfeldsensoren des zweiten Fahrzeugs erfasst. Diese Umfeldsensoren können beispielsweise zu Ultraschallsensoren ausgebildet sein.

Als zweiter Schritt 780 im Flussdiagramm erfolgt die Übertragung der soeben erfassten Parkflächeninformationen durch das zweite Fahrzeug an den Server. Dies geschieht mittels der Kommunikationseinrichtung des zweiten Fahrzeugs.

Im nächsten Schritt des Flussdiagramms 790 erfolgt die Speicherung der übertragenen Parkflächeninformationen durch den Server. Zudem erfolgt eine Auswertung der Parkflächeninformationen durch den Server, ob es sich um eine freie Querparkfläche oder Parallelparkfläche handelt.

Im vierten Schritt des Flussdiagramms 800 kommt es schlussendlich zur Übertragung der zuvor gespeicherten und ausgewerteten Parkflächeninformation durch den Server an ein parkplatzsuchendes Fahrzeug.

Figur 8 zeigt ein Flussdiagramm der Planung des unterstützten Einparkvorgangs durch das parkplatzsuchende Fahrzeug, wobei es hierbei zum Vergleich der empfangenen, wie auch selbst erfassten Parkflächeninformationen kommt.

Im ersten Schritt 810 des Flussdiagramms kommt es zunächst zum Empfang der Parkflächeninformationen , welche zuvor von einem zweiten Fahrzeug erfasst wurden waren. Gleichzeitig zu dieser Übertragung an das parkplatzsuchende Fahrzeug, erfasst das parkplatzsuchende Fahrzeug im nächsten Schritt 820 des Flussdiagramms selbst eine aktuelle Standortinformation durch beispielsweise eine Navigationseinrichtung und aktuelle Distanzinformationen durch beispielsweise Umfeldsensoren, welche am Fahrzeug angebracht sind.

Im nächsten Schritt 830 des Flussdiagramms werden die standortbasierten Parkflächeninformationen und die aktuelle Standortinformation des parkplatzsuchenden Fahrzeugs durch eine Recheneinheit miteinander verglichen. Gleichzeitig dazu kommt es im nächsten Schritt 840 des Flussdiagramms zur Bestimmung eines Offsets, insbesondere durch Differenzbildung der distanzbasierten Parkflächeninformationen und der aktuellen Distanzinformationen durch die Recheneinheit.

Auf Basis des nun bestimmten Offsets und der verglichenen standortbasierten Parkflächeninformationen kommt es im nächsten Schritt 850 des Flussdiagramms zur Bahnplanung des einzügigen Einparkvorganges mittels des Einparkassistenten. Nach der Bahnplanung kann nun im nächsten Schritt 860 des Flussdiagramms der einzügige, unterstützte Einparkvorgang, welcher automatisch oder teilautomatisch erfolgt, durchgeführt werden.

## Patentansprüche

1. Verfahren zur Planung eines unterstützten Einparkvorgangs, wobei das Verfahren die folgenden Schritte umfasst:
a.) Empfangen (810) von Parkflächen-Informationen, umfassend standortbasierte und distanzbasierte Informationen, innerhalb eines GPS-Radius (60) durch ein parkplatzsuchendes Fahrzeug (10,110,270,600) von einem Server (80) mittels einer Kommunikationseinrichtung (730) des Fahrzeugs (10,110,270,600), wobei sich der GPS-Radius während einer Fahrt des Fahrzeugs mitbewegt und das Fahrzeug den Mittelpunkt des GPS-Radius bildet oder sich am Rand des GPS-Radius befindet,
b.) Vergleichen (830) der standortbasierten Parkflächen-Informationen und einer aktuellen Standort-Information des Fahrzeugs(10,110,270,600) durch eine Recheneinheit (760) und
c.) Bestimmung (840) eines Offsets aus den distanzbasierten Parkflächen-Informationen und aktuellen von Umfeldsensoren des Fahrzeugs(10,110,270,600) erfassten Distanz-Informationen (70,27,475), welche durch Umfeldsensoren des Fahrzeugs erfasst (820) werden, insbesondere durch Differenzbildung,
d.) Bahnplanung (50,300,850) eines einzügigen Einparkvorganges des Fahrzeugs (10,110,270,600) mittels eines Einparkassistenten (750), basierend auf dem Offset und den standortbasierten Parkflächen-Informationen.

2. Verfahren nach Anspruch 1, **dadurch gekennzeichnet, dass** die standortbasierten Parkflächen-Informationen GPS-Informationen umfassen.

3. Verfahren nach Anspruch 1 oder 2, **dadurch gekennzeichnet, dass** die distanzbasierten Parkflächen-Informationen gemessene Distanzwerte zu nächstliegenden Objekten umfassen.

4. Verfahren nach einem der Ansprüche 1 bis 3, **dadurch gekennzeichnet, dass** der unterstützte Einparkvorgang nach Durchführung der Bahnplanung (50,300,850) automatisch oder teilautomatisch durch den Einparkassistenten (750) erfolgt (860).

5. Verfahren nach einem der Ansprüche 1 bis 4, **dadurch gekennzeichnet, dass** als Parkfläche nur Flächen berücksichtigt werden, deren Länge und Breite ein Einparken des Fahrzeugs (10,110,270,600) ermöglichen.

6. Verfahren nach Anspruch 1 bis 5, **dadurch gekennzeichnet, dass** die Parkfläche Quer-(40,), sowie Parallelparkflächen (290,405,670,685) umfasst.

7. System zur Planung eines unterstützten Einparkvorgangs, welches zur Erfassung von Parkflächen-Informationen Umfeldsensoren und eine Navigationseinrichtung (740) aufweist, zum Empfangen von Parkflächen-Informationen von einem Server (80) eine Kommunikationseinrichtung (730) aufweist und zum Unterstützen eines Einparkvorganges einen Einparkassistent (750) aufweist, und das eingerichtet ist, ein Verfahren nach einem der Ansprüche 1 bis 6 auszuführen, wobei das System zur Bestimmung eines Offsets eine Recheneinheit (760) aufweist.

8. System nach Anspruch 7, wobei die Umfeldsensoren zur Weg- und Abstandsmessung ausgebildet sind.

9. System nach Anspruch 7 oder 8, wobei die Umfeldsensoren Ultraschallsensoren (30a, 30b, 30c, 30d, 30e, 30f, 115a, 115b, 210a, 210b, 250a,250b, 250c, 250d, 250e, 250f, 470a, 470b, 470c, 470d, 635a, 635b, 635c, 635d, 635e, 635f) umfassen.

10. System nach einem der Ansprüche 7 bis 9, wobei die Kommunikationseinrichtung (730) zur drahtlosen Sendeübertragung ausgebildet ist.

11. Einparkassistent (750) zur Verwendung in einem System nach Anspruch 7, welcher dazu eingerichtet ist, ein Verfahren nach einem der vorherigen Ansprüche 1-6 auszuführen.

12. System zur Planung eines unterstützten Einparkvorgangs, umfassend zumindest ein zweites Fahrzeug (420,620,690) zur Erfassung (770) und zur Übertragung (780) von standortbasierten und distanzbasierten Parkflächen-Informationen , wobei das zweite Fahrzeug (420,620,690) zur Erfassung von standortbasierten Parkflächeninformationen eine Navigationseinrichtung (740) aufweist, zur Erfassung von distanzbasierten Parkflächen-Informationen Umfeldsensoren aufweist und zur Übertragung der standortbasierten und distanzbasierten Parkflächen- Informationen eine Kommunikationseinrichtung (730) aufweist,
einen Server (80), der eingerichtet ist Parkflächen-Informationen von dem zweiten Fahrzeug (420,620,690) zu Empfangen, zu Speichern, Auszuwerten (790) und zu Übertragen
und ein parkplatzsuchendes Fahrzeug(10,110,270,600), das eingerichtet ist, ein Verfahren nach einem der Ansprüche 1 bis 6 auszuführen.

13. System nach Anspruch 12, wobei sich das zweite Fahrzeug (420,620,690) während der Erfassung der Parkflächen-Informationen in Bewegung befindet.

14. System nach Anspruch 12, wobei das zweite Fahrzeug (420,620,690) während der Erfassung der Parkflächen-Informationen parkt.

15. System nach Anspruch 13, wobei das zweite Fahrzeug(420,620,690) ausgebildet ist, Parkflächen-Informationen von Parkflächen, die an die Fahrspur des zweiten Fahrzeugs (420,620,690) angrenzen und/oder von Parkflächen, die an die Gegenspur des zweiten Fahrzeugs (420,620,690) angrenzen, zu erfassen.

16. System nach Anspruch 12, wobei der Server (80) die Parkflächen-Informationen löscht und/oder überschreibt, falls ein zuvor freier Parkplatz von einem vorbeifahrenden dritten Fahrzeug (410, 610) und/oder parkenden Fahrzeug (450,560a,560b) als nun belegt erkannt wird.

## Claims

1. Method for planning an assisted parking process, wherein the method comprises the following steps:
a) reception (810) of parking area information, comprising location-based and distance-based information, within a GPS radius (60), a vehicle (10, 110, 270, 600) which is searching for a parking space from a server (80) by means of a communication device (730) of the vehicle (10, 110, 270, 600), wherein the GPS radius moves along while the vehicle is travelling, and the vehicle forms the centre point of the GPS radius or is located at the edge of the GPS radius,
b) comparison (830) of the location-based parking area information and a current location information item of the vehicle (10, 110, 270, 600) by a computing unit (760), and
c) determination (840) of an offset from the distance-based parking area information and current distance information (70, 27, 475) which is acquired by surroundings sensors of the vehicle (10, 110, 270, 600) and which is acquired (820) by surroundings sensors of the vehicle, in particular by forming differences,
d) path planning (50, 300, 850) of a single-movement parking process of the vehicle (10, 110, 270, 600) by means of a parking assistant (750), on the basis of the offset and the location-based parking area information.

2. Method according to Claim 1, **characterized in that** the location-based parking area information comprises GPS information.

3. Method according to Claim 1 or 2, **characterized in that** the distance-based parking area information comprises measured distance values from objects in the direct vicinity.

4. Method according to one of Claims 1 to 3, **characterized in that** the assisted parking process is carried out (860) automatically or partially automatically by the parking assistant (750) after the path planning (50, 300, 850) has occurred.

5. Method according to one of Claims 1 to 4, **characterized in that** only areas whose length and width permit the vehicle (10, 110, 270, 600) to park are taken into account as a parking area.

6. Method according to Claims 1 to 5, **characterized in that** the parking area comprises transverse parking areas (40) as well as parallel parking areas (290, 405, 670, 685) .

7. System for planning an assisted parking process which has surrounding sensors and a navigation device (740) for acquiring parking area information, a communication device (730) for receiving parking area information from a server (80), and a parking assistant (750) for assisting a parking process, and which is configured to execute a method according to one of Claims 1 to 6, wherein the system has a computing unit (760) for determining an offset.

8. System according to Claim 7, wherein the surroundings sensors are designed to measure travel and distances.

9. System according to Claim 7 or 8, wherein the surrounding sensors comprise ultrasonic sensors (30a, 30b, 30c, 30d, 30e, 30f, 115a, 115b, 210a, 210b, 250a, 250b, 250c, 250d, 250e, 250f, 470a, 470b, 470c, 470d, 635a, 635b, 635c, 635d, 635e, 635f).

10. System according to one of Claims 7 to 9, wherein the communication device (730) is designed to transmit wirelessly.

11. Parking assistant (750) for use in a system according to Claim 7, which is configured to execute a method according to one of the preceding Claims 1 to 6.

12. System for planning an assisted parking process, comprising at least one second vehicle (420, 620, 690) for acquiring (770) and for transmitting (780) location-based and distance-based parking area information, wherein the second vehicle (420, 620, 690) has a navigation device (740) for acquiring location-based parking area information, surrounding sensors for acquiring distance-based parking area information, and a communication device (730) for transmitting the location-based and distance-based parking area information,
a server (80) which is configured to receive, store, evaluate (790) and transmit parking area information from the second vehicle (420, 620, 690),
and a vehicle (10, 110, 270, 600) which is looking for a parking space and is configured to execute a method according to one of Claims 1 to 6.

13. System according to Claim 12, wherein the second vehicle (420, 620, 690) is in motion while the parking area information is being acquired.

14. System according to Claim 12, wherein the second vehicle (420, 620, 690) is parked while the parking area information is being acquired.

15. System according to Claim 13, wherein the second vehicle (420, 620, 690) is designed to acquire parking area information from parking areas which adjoin the lane of the second vehicle (420, 620, 690) and/or parking areas which adjoin the oncoming lane of the second vehicle (420, 620, 690).

16. System according to Claim 12, wherein the server (80) deletes and/or overwrites the parking area information if a third vehicle (410, 610) which is driving past a previously free parking space and/or a parking vehicle (450, 560a, 560b) detects said parking space has now been occupied.

## Revendications

1. Procédé de planification d'une manœuvre de stationnement assistée, le procédé comprenant les étapes suivantes consistant à :
a) recevoir (810) des informations sur des emplacements de stationnement, comprenant des informations basées sur le lieu et basées sur la distance, dans un rayon GPS (60) par un véhicule (10, 110, 270, 600) cherchant une place de stationnement à partir d'un serveur (80) au moyen d'un dispositif de communication (730) du véhicule (10, 110, 270, 600), le rayon GPS se déplaçant conjointement pendant un déplacement du véhicule, et le véhicule formant le centre du rayon GPS ou se trouvant au bord du rayon GPS,
b) comparer (830) les informations sur des emplacements de stationnement basées sur le lieu et une information de lieu actuelle du véhicule (10, 110, 270, 600) par une unité de calcul (760), et
c) déterminer (840) un décalage à partir des informations sur des emplacements de stationnement basées sur la distance et d'informations de distance actuelles (70, 27, 475), détectées par des capteurs d'environnement du véhicule (10, 110, 270, 600), qui sont détectées (820) par des capteurs d'environnement du véhicule, en particulier par soustraction,
d) planification de trajectoire (50, 300, 850) d'une manœuvre de stationnement simple du véhicule (10, 110, 270, 600) au moyen d'un dispositif d'aide au stationnement (750) sur la base du décalage et des informations sur des emplacements de stationnement basées sur le lieu.

2. Procédé selon la revendication 1, **caractérisé en ce que** les informations sur des emplacements de stationnement basées sur le lieu comprennent des informations GPS.

3. Procédé selon la revendication 1 ou 2, **caractérisé en ce que** les informations sur des emplacements de stationnement basées sur la distance comprennent des valeurs de distance mesurées jusqu'aux objets les plus proches.

4. Procédé selon l'une quelconque des revendications 1 à 3, **caractérisé en ce que** la manœuvre de stationnement assistée est effectuée (860) de manière automatique ou semi-automatique par le dispositif d'aide au stationnement (750) après réalisation de la planification de trajectoire (50, 300, 850).

5. Procédé selon l'une quelconque des revendications 1 à 4, **caractérisé en ce que** comme emplacement de stationnement, seuls sont pris en considération des emplacements dont la longueur et la largeur permettent le stationnement du véhicule (10, 110, 270, 600).

6. Procédé selon la revendication 1 à 5, **caractérisé en ce que** l'emplacement de stationnement comprend des emplacements de stationnement latéral (40) ainsi que des emplacements de stationnement parallèle (290, 405, 670, 685).

7. Système permettant de planifier une manœuvre de stationnement assistée qui présente des capteurs d'environnement et un dispositif de navigation (740) pour la détection d'informations sur des emplacements de stationnement, qui présente un dispositif de communication (730) pour recevoir des informations sur des emplacements de stationnement à partir d'un serveur (80), et qui présente un dispositif d'aide au stationnement (750) pour assister une manœuvre de stationnement, et qui est aménagé pour exécuter un procédé selon l'une quelconque des revendications 1 à 6, le système présentant une unité de calcul (760) pour la détermination d'un décalage.

8. Système selon la revendication 7, dans lequel les capteurs d'environnement sont réalisés pour mesurer les déplacements et les distances.

9. Système selon la revendication 7 ou 8, dans lequel les capteurs d'environnement comprennent des capteurs à ultrasons (30a, 30b, 30c, 30d, 30e, 30f, 115a, 115b, 210a, 210b, 250a, 250b, 250c, 250d, 250e, 250f, 470a, 470b, 470c, 470d, 635a, 635b, 635c, 635d, 635e, 635f).

10. Système selon l'une quelconque des revendications 7 à 9, dans lequel le dispositif de communication (730) est réalisé pour la transmission d'émission sans fil.

11. Dispositif d'aide au stationnement (750) pour une utilisation dans un système selon la revendication 7, qui est aménagé pour exécuter un procédé selon l'une quelconque des revendications précédentes 1 à 6.

12. Système permettant de planifier une manœuvre de stationnement assistée, comprenant au moins un deuxième véhicule (420, 620, 690) pour détecter (770) et pour transmettre (780) des informations sur des emplacements de stationnement basées sur le lieu et basées sur la distance, dans lequel le deuxième véhicule (420, 620, 690) présente un dispositif de navigation (740) pour la détection d'informations sur des emplacements de stationnement basées sur le lieu, présente des capteurs d'environnement pour la détection d'informations sur des emplacements de stationnement basées sur la distance, et présente un dispositif de communication (730) pour la transmission des informations sur des emplacements de stationnement basées sur le lieu et basées sur la distance,
un serveur (80) qui est aménagé pour recevoir du deuxième véhicule (420, 620, 690) des informations sur des emplacements de stationnement et de les stocker, évaluer (790) et transmettre,
et un véhicule (10, 110, 270, 600) cherchant une place de stationnement, qui est aménagé pour exécuter un procédé selon l'une quelconque des revendications 1 à 6.

13. Système selon la revendication 12, dans lequel le deuxième véhicule (420, 620, 690) est en mouvement pendant la détection des informations sur des emplacements de stationnement.

14. Système selon la revendication 12, dans lequel le deuxième véhicule (420, 620, 690) stationne pendant la détection des informations sur des emplacements de stationnement.

15. Système selon la revendication 13, dans lequel le deuxième véhicule (420, 620, 690) est réalisé pour détecter des informations sur des emplacements de stationnement concernant des emplacements de stationnement qui sont adjacents à la voie du deuxième véhicule (420, 620, 690) et/ou des emplacements de stationnement qui sont adjacents à la voie opposée du deuxième véhicule (420, 620, 690).

16. Système selon la revendication 12, dans lequel le serveur (80) supprime et/ou écrase les informations sur des emplacements de stationnement si une place de stationnement précédemment libre est reconnue par un troisième véhicule (410, 610) de passage et/ou un véhicule en stationnement (450, 560a, 560b) comme étant désormais occupée.
